# EUROPÄISCHE PATENTSCHRIFT

(11) **EP 1 955 754 B1**
(45) Veröffentlichungstag und Bekanntmachung des Hinweises auf die Patenterteilung: **11.01.2017**
(21) Anmeldenummer: 07121170.0
(22) Anmeldetag: 21.11.2007
(51) Int. Cl.: B01D 47/05, B01D 53/26, D06F 43/08, D06F 58/22, D06F 58/24, D06F 67/00, D06F 95/00, F28B 1/02, F28D 7/16, F28F 19/01, F28B 1/00

(54) **Vorrichtung und Verfahren zum Filtern von Schmutzpartikeln**
Device and method for filtering dirt particles
Dispositif et procédé destinés au filtrage de particules de poussière

(30) Priorität: 26.01.2007 DE 102007004100
(43) Veröffentlichungstag der Anmeldung: 13.08.2008
(73) Patentinhaber: Krause, Joachim, 96486 Lautertal (DE)
(72) Erfinder: Krause, Joachim, 96486 Lautertal (DE)
(74) Vertreter: Isarpatent

(56) Entgegenhaltungen:
- EP-A- 0 444 846
- DE-A1- 1 501 620
- DE-A1- 3 111 680
- DE-A1- 3 528 426
- US-A- 4 548 262

## Beschreibung

Die Erfindung betrifft ein Verfahren zum Herausfiltern von Schmutzpartikeln, die in einer wasserübersättigten Abluft enthalten sind, wobei gleichzeitig Energie gewonnen wird sowie die Verwendung eines Abluftfilters zum Herausfiltern von Schmutzpartikeln.

Textilwaschanlagen weisen Textilbügelmaschinen auf, die große Mengen an wasserübersättigter Abluft erzeugen. Bei herkömmlichen Waschanlagen wird diese wasserübersättigte und verschmutzte Abluft ungefiltert und ohne Energie-Recycling an die Umgebung abgegeben wird. In einer Textilwaschanlage zum Waschen von Textilien werden die gewaschenen Textilien einer Textilbügelmaschine zugeführt, welche die gewaschenen Textilien presst und bügelt. Dabei entsteht einerseits Pressenwasser und andererseits wasserübersättigte Mangelabluft, die einen hohen Anteil an Textilflusen sowie Anteile der beim Waschvorgang verwendeten Wachse, Tenside und sonstige Schmutzpartikel enthält. Wird die wassergesättigte Mangelabluft an den Kühlrippen eines herkömmlichen Wärmetauschers vorbeigeführt, lagern sich an den Kühlrippen die Textilflusen oder sonstige Schmutzpartikel ab und verdrecken die Kühlrippen. Hierdurch steigt der Luftwiderstand des Wärmetauschers gegenüber dem zugeführten Luftstrom an, sodass es zu einem Staueffekt kommt und die Leistung der Textilbügelmaschine abnimmt.

Bei derartigen Waschanlagen nach dem Stand der Technik sind daher herkömmliche Wärmetauscher zum Energie-Recycling ungeeignet. Bei herkömmlichen Waschanlagen wird deshalb die wasserübersättigte Abluft der Waschanlage, die stark mit Schmutzpartikeln belastet ist, ungefiltert und ohne Energie-Recycling an die Umgebung abgegeben.

Die Druckschrift DE 31 11 680 A1 offenbart ein Verfahren zur Rückgewinnung von in Wäschereibetrieben anfallenden Abwärme unter Verwendung eines Mischwärmeübertragers.

Es ist eine Aufgabe der vorliegenden Erfindung ein Verfahren zum Herausfiltern von Schmutzpartikeln,
die in einer wasserübersättigten Abluft enthalten sind, zu schaffen, welche die in der Abluft abgegebene Energie zumindest teilweise wiedergewinnt.

Diese Aufgabe wird erfindungsgemäß durch ein Verfahren zum Filtern von Schmutzpartikeln aus einer wasserübersättigten Abluft mit den im Patentanspruch 1 angegebenen Merkmalen gelöst.

Dabei kann ein selbstreinigendes Abluftfilter zum Herausfiltern von Schmutzpartikeln, die in einer wasserübersättigten Abluft enthalten sind, verwendet werden, wobei das Abluftfilter aufweist:
- mehrere Röhren, durch welche die wasserübersättigte Abluft in einer Längsrichtung des Abluftfilters mit einer einstellbaren Massenstrommenge hindurchströmt, und
- mindestens einer Wendekammer, durch die ein Fluid außen an den Röhren des Abluftfilters mit einer einstellbaren Massenstrommenge zum Abkühlen der durch die Röhren hindurchströmenden Abluft vorbeiströmt,
- wobei ein in der Abluft enthaltener Wasserdampf innerhalb der Röhren an einem wandernden Taupunkt zu Wasser kondensiert, und
- wobei sich die Lage des wandernden Taupunktes entlang der Längsrichtung des Abluftfilters in Abhängigkeit von einer Massenstrommengendifferenz Δm° zwischen der Massenstrommenge der Abluft und einer Massenstrommenge des Fluids verändert und das kondensierte Wasser die in der Abluft enthaltenen Schmutzpartikel aufnimmt und die Röhren innen reinigt.

Das bei dem erfindungsgemäßen Verfahren verwendete selbstreinigende Abluftfilter hat als einen Vorteil, dass es sehr robust gegenüber Verschmutzungen ist und somit eine lange Betriebszeit aufweist.

Ein weiterer Vorteil des verwendeten selbstreinigenden Abluftfilters besteht darin, dass es die in der gesättigten Abluft enthaltenen Schmutzpartikel filtert und somit die Umweltbelastung durch die wasserübersättigte Abluft stark reduziert.

Ein weiterer Vorteil des verwendeten selbstreinigenden Abluftfilters besteht darin, dass das Fluid durch die Abluft zur Energiegewinnung erwärmt wird.

Bei einer Ausführungsform des verwendeten selbstreinigenden Abluftfilters verlaufen die Röhren in Längsrichtung ohne Neigung parallel zu einer Außenwandung des Abluftfilters.

Bei einer alternativen Ausführungsform des verwendeten selbstreinigenden Abluftfilters sind die in Längsrichtung des Abluftfilters verlaufenden Röhren derart geneigt angeordnet, dass sich das Kondenswasser, welches innerhalb der Röhren auf den Röhreninnenwandungen kondensiert, sich unten innerhalb der Röhren sammelt und aus den Röhren abfließt.

Bei einer weiteren Ausführungsform des verwendeten selbstreinigenden Abluftfilters weist die Wendekammer mehrere quer zu der Längsrichtung des Abluftfilters angeordnete Umlenkwandungen auf, sodass das Fluid mäanderförmig außen an den Röhren quer zu der Längsrichtung des Abluftfilters vorbeiströmt.

Bei einer Ausführungsform des verwendeten selbstreinigenden Abluftfilters wird die heiße Abluft von einer Textilbügelmaschine an das selbstreinigende Abluftfilter abgegeben.

Bei einer Ausführungsform des verwendeten selbstreinigenden Abluftfilters weist die heiße Abluft der Textilbügelmaschine eine Temperatur von 90°C bis 100°C auf.

Bei einer Ausführungsform des verwendetenselbstreinigenden Abluftfilters werden die in der Abluft der Textilbügelmaschine enthaltenen Textilflusen, welche durch das kondensierte Wasser aufgenommen werden, aus dem gesammelten Kondenswasser des selbstreinigenden Abluftfilters durch ein weiteres Textilflusenfilter herausgefiltert.

Bei einer Ausführungsform des verwendeten selbstreinigenden Abluftfilters ist das Fluid ein Gas oder eine Flüssigkeit.

Bei einer Ausführungsform des verwendeten selbstreinigenden Abluftfilters weist der selbstreinigende Abluftfilter mehrere Wendekammern auf, welchen jeweils ein zugehöriges Fluid separat zugeführt wird.

Bei einer Ausführungsform des verwendeten selbstreinigenden Abluftfilters wird das der Wendekammer des selbstreinigenden Abluftfilters zugeführte Fluid durch das selbstreinigende Abluftfilter erwärmt abgegeben.

Bei einer Ausführungsform des verwendeten selbstreinigenden Abluftfilters besteht das einer Wendekammer des selbstreinigende Abluftfilters zugeführte Fluid aus einer Lauge, die von einer Textilwaschanlage an das selbstreinigende Abluftfilter abgegeben wird und die von dem selbstreinigenden Abluftfilter erwärmt an die Textilwaschanlage zurückgeführt wird.

Bei einer Ausführungsform des verwendeten selbstreinigenden Abluftfilters besteht das einer weiteren Wendekammer des selbstreinigenden Abluftfilters zugeführte Fluid aus Wasser, welches das durch das Textilflusenfilter gefilterte Kondenswasser des selbstreinigenden Abluftfilters enthält.

Bei einer Ausführungsform des verwendetenselbstreinigenden Abluftfilters ist das einer weiteren Wendekammer des selbstreinigenden Abluftfilters zugeführte Fluid Wasser, das für eine Heizung erwärmt wird.

Bei einer Ausführungsform des verwendetenselbstreini-genden Abluftfilters weisen die Röhren einen Durchmesser von etwa 20 mm auf.

Bei einer Ausführungsform des verwendetenselbstreini-genden Abluftfilters sind die Röhren aus Edelstahl hergestellt.

Bei einer Ausführungsform des verwendetenselbstreinigenden Abluftfilters weisen die Röhrenwandungen der jeweiligen Röhren eine Dicke von etwa 1 mm auf.

Bei einer Ausführungsform des verwendetenselbstreinigenden Abluftfilters weist mindestens eine Wendekammer einen Faltenbalk zum Ausgleich einer Wärmeausdehnung der Röhren auf.

Das Abluftfilter kann in einer Textilreinigungsanlage verwendet werden, wobei die Textilreinigungsanlage aufweist:
- eine Textilwaschanlage zum Waschen von Textilien mittels eines Fluids,
- eine Textilbügelmaschine zum Bügeln der von der Textilwaschanlage gewaschenen Textilien, wobei die Textilbügelmaschine wasserübersättigte Abluft abgibt, und
- ein selbstreinigendes Abluftfilter zum Herausfiltern von Schmutzpartikeln, die in einer wasserübersättigten Abluft enthalten sind, wobei das Abluftfilter aufweist:
- mehrere Röhren, durch welche die wasserübersättigte Abluft in einer Längsrichtung des Abluftfilters mit einer einstellbaren Massenstrommenge hindurchströmt, und
- mindestens eine Wendekammer, durch die ein Fluid außen an den Röhren des Abluftfilters mit einer einstellbaren Massenstrommenge zum Abkühlen der durch die Röhren hindurchströmenden Abluft vorbeiströmt,
- wobei ein in der Abluft enthaltener Wasserdampf innerhalb der Röhren an einem wandernden Taupunkt zu Wasser kondensiert, und
- wobei sich die Lage des wandernden Taupunktes entlang der Längsrichtung des Abluftfilters in Abhängigkeit von einer Massenstrommengendifferenz Δm° zwischen der Massenstrommenge der Abluft und einer Massenstrommenge des Fluids verändert und das kondensierte Wasser die in der Abluft enthaltenen Schmutzpartikel aufnimmt und die Röhren innen reinigt.

Bei einer Ausführungsform der Textilreinigungsanlage wird das von dem selbstreinigenden Abluftfilter gebildete Kondenswasser durch ein Textilflusenfilter an die Textilwaschanlage zum Recyceln von Wasser zurückgeführt.

Im Weiteren werden Ausführungsformen des erfindungsgemäßen Verfahrens und des dabei verwendeten selbstreinigenden Abluftfilters und der Textilwaschanlage unter Bezugnahme auf die beigefügten Figuren zur Erläuterung erfindungswesentlicher Merkmale näher beschrieben.

Es zeigen:
- Figur 1:: eine Ausführungsform eines bei dem erfindungsgemäßen Verfahren verwendeten selbstreinigenden Abluftfilters;
- Figur 2:: ein Diagramm zur Erläuterung der Funktionsweise des selbstreinigenden Abluftfilters;
- Figur 3:: ein Blockschaltbild einer Textilreinigungsanlage, welches ein selbstreinigendes Abluftfilter aufweist;
- Figur 4:: eine weitere Ausführungsform des verwendeten selbstreinigenden Abluftfilters;
- Figur 5:: eine Ausführungsform der Textilreinigungsanlage, welches das in Figur 4 dargestellte selbstreinigende Abluftfilter aufweist.

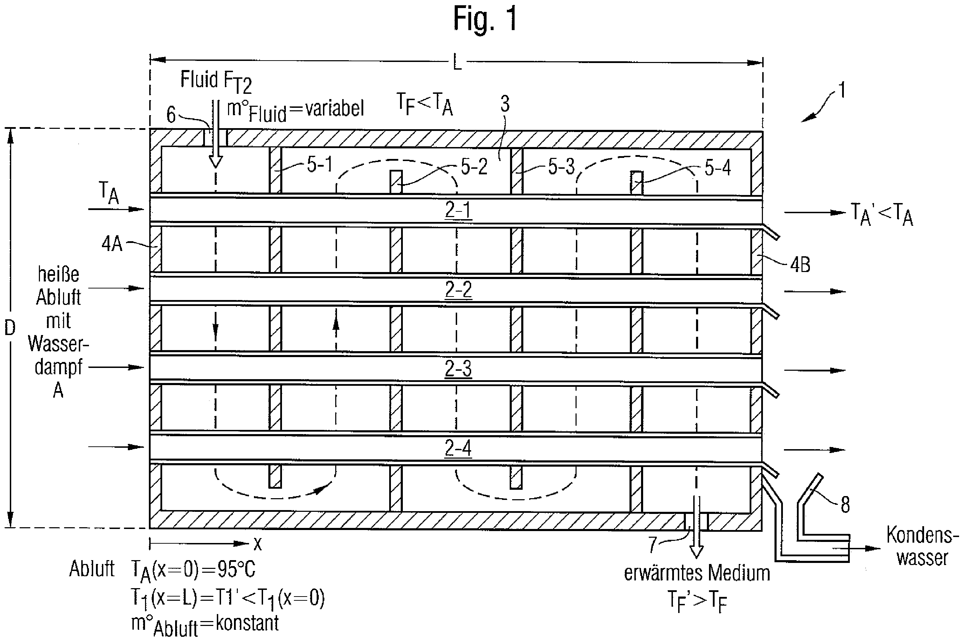

Wie man aus Figur 1 erkennen kann, weist ein selbstreinigendes Abluftfilter 1 zum Herausfiltern von Schmutzpartikeln, das bei dem erfindungsgemäßen Verfahren verwendet werden kann, eine Vielzahl von Röhren 2 auf, durch die jeweils die übersättigte Abluft in Längsrichtung des Abluftfilters 1 hindurch strömt. Die Röhren 2 verlaufen innerhalb mindestens einer Wendekammer 3, durch die ein Fluid (beispielsweise ein Gas oder eine Flüssigkeit) außen an den Röhren 2 mit einer einstellbaren Massenstrommenge (m_{A}°) zum Abkühlen der durch die Röhren 2 hindurchströmenden Abluft vorbeiströmt. Die Wendekammer 3 des Abluftfilters 1 ist vorzugsweise zylinderförmig und weist beispielsweise einen Durchmesser D von etwa 500 mm auf. Die Länge L der Wendekammer 3 hängt von der jeweiligen Anwendung bzw. von dem Verschmutzungsgrad und der Temperatur T der Abluft A ab. Die in Längsrichtung verlaufenden Röhren 2 sind in Stirnplatten 4A, 4B an der Vorder- und Rückseite des Abluftfilters 1 eingeschweißt und eingewalzt. Die Stirnplatten 4A, 4B weisen beispielsweise eine Wandungsdicke von 1,5 von 2 cm auf. Die Röhren 2 weisen bei dem in Figur 1 dargestellten Abluftfilter 1 einen Durchmesser von etwa 20 mm auf und haben einen Abstand von etwa 100 mm zueinander. Die Wendekammer 3 enthält Wendeplatten 5-1, 5-2, 5-3, 5-4, sodass das an einem Einlass 6 der Wendekammer 3 hineinströmende Fluid F mäanderförmig an den Röhren 2 vorbeiströmt, bis es zu einem Auslass 7 der Wendekammer 3 gelangt. Die Wendeplatten 5-i weisen beispielsweise eine Dicke von etwa 1 mm auf und bestehen vorzugsweise aus Edelstahl. Der Abstand zwischen den Wendeplatten 5-i beträgt beispielsweise etwa 40 mm. Die Dicke der Röhrenwandungen der Röhren 2-i beträgt beispielsweise 1 mm, wobei die Röhren 2-i vorzugsweise ebenfalls aus Edelstahl hergestellt sind. Das in Figur 1 dargestellte Abluftfilter 1 kann in beliebiger Lage montiert werden, d. h. wie in Figur 1 dargestellt horizontal, aber auch vertikal oder in einem beliebigen Neigungswinkel relativ zur Erdoberfläche.

Die heiße Abluft A, welche mit Wasserdampf übersättigt ist, trifft bei einer einstellbaren Massenstrommenge m_{A}° und mit einer bestimmten Temperatur T_{A}, beispielsweise 90°C bis 100°C auf die Stirnplatte 4A des Abluftfilters 1 und strömt dann durch die Röhren 2-i hindurch. Gleichzeitig fließt an der Außenseite der Röhren 2 ein kühlendes Fluid F mäanderförmig durch die Wendekammer 3, wobei sich das Fluid F erwärmt und die Abluft A abkühlt. Dabei kondensiert der in der Abluft A enthaltene Wasserdampf innerhalb der Röhren 2 an einem wandernden Taupunkt TP(x), d. h. an einem Taupunkt TP dessen Lage x sich innerhalb der Röhren 2 verändert. Die Lage des wandernden Taupunkts TP entlang der Längsrichtung des Abluftfilters 1 ändert sich in Abhängigkeit von einer Massenstrommengendifferenz Δm° zwischen der Massenstrommenge m_{A}° der Abluft A und einer Massenstrommenge m_{F}° des Fluids F. Das kondensierte Wasser nimmt die in der Abluft A enthaltenen Schmutzpartikel, beispielsweise Textilflusen, Wachspartikel und sonstige Schmutzpartikel auf und reinigt gleichzeitig die Röhren 2-i auf der Innenseite.

Bei einer möglichen Ausführungsform des verwendeten selbstreinigenden Abluftfilters 1 sind die in Längsrichtung des Abluftfilters 1 verlaufenden Röhren 2 geneigt angeordnet. Durch die Neigung der Röhren 2 sowie des Abluftstroms durch die Röhren kann das Kondenswasser, welches sich in den Röhren 2 an den Röhreninnenwandungen bildet und welches sich innerhalb der Röhren 2 unten sammelt, aus den Röhren 2-i abfließen und beispielsweise durch einen Trichter 8 aufgefangen werden. Vorzugsweise verlaufen die Röhren parallel zu der Außenwandung

des Abluftfilters ohne Neigung, sodass allein der Abluftstrom das gesammelte Kondenswasser aus den Röhren herausbewegt.

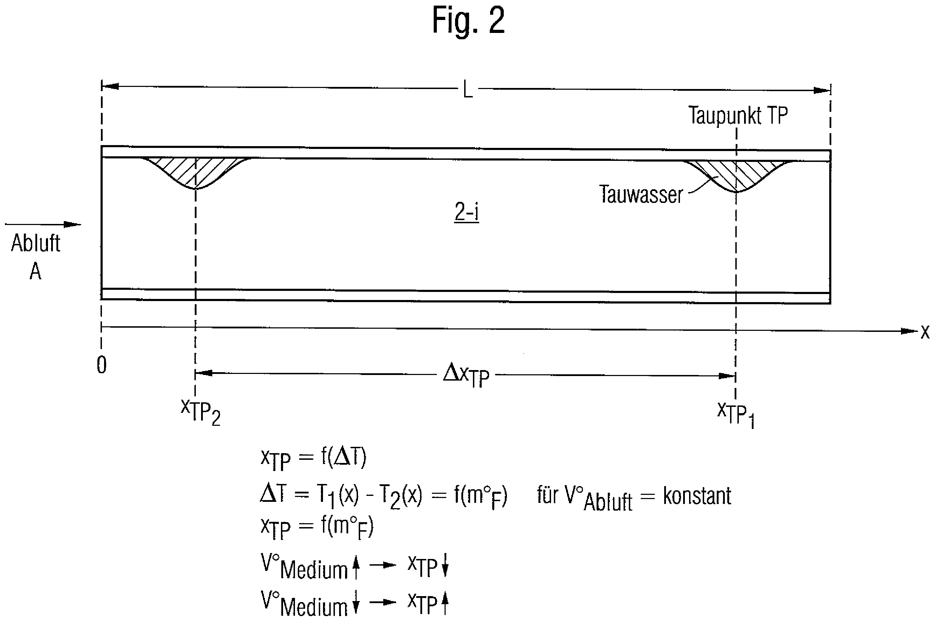

Figur 2 verdeutlicht die Funktionsweise des verwendeten selbstreinigenden Abluftfilters 1. Beim Hindurchströmen durch eine Röhre 2-1 des Abluftfilters 1 kühlt sich die wasserübersättigte Abluft A ab, bis der in der Abluft A enthaltene Wasserdampf an einem Taupunkt TP zu Tauwasser kondensiert. Dabei hängt die Lage des Taupunktes TP von einer Massenstrommengendifferenz Δm° zwischen der Massenstrommenge m_{A}° der Abluft und einer Massenstrommenge m_{F}° des die Röhren 2 umströmenden Fluids F ab. Ist die Massenstrommenge Δₘ° der wasserübersättigten Abluft A konstant hängt die Lage x des Taupunkts TP allein von der Massenstrommenge m°_{F} des Fluids F ab. Wird die Massenstrommenge m°_{F} des Fluids F erhöht, wandert der Taupunkt TP zu der Stirnplatte 4A des Abluftfilters 1, d. h. hin zu dem Taupunkt XTP2, wie er in Figur 2 dargestellt ist. Wird die Massenstrommenge Δm°_{F} des kühlenden Fluids F reduziert, wandert der Taupunkt TP hin zur Ausgangsseite des Abluftfilters 1, d. h. hin zu der Stirnplatte 4B, wie sie in Figur 1 dargestellt ist. Bei dem verwendeten selbstreinigenden Abluftfilter 1 ist bei einer bevorzugten Ausführungsform sowohl die Massenstrommenge m_{A}° der wasserübersättigten Abluft A als auch die Massenstrommenge m°_{F} des Fluids F einstellbar. Demzufolge kann auch die Lage des Taupunkts TP bei dem erfindungsgemäßen Abluftfilter 1 durch Einstellen der Massenstrommengen, insbesondere des umströmenden Fluids F eingestellt werden. Das Tauwasser bzw. Kondenswasser, wie es sich auf der Innenseite der Röhren 2-i bildet, nimmt die in der Abluft A enthaltenen Schmutzpartikel auf und sammelt sich auf der Unterseite der jeweiligen Röhre 2-i. Durch Veränderung der Lage des Taupunktes TP wird zudem die Innenseite der Röhren 2-i gereinigt, Schmutzpartikel, wie beispielsweise Textilflusen, welche sich auf der Innenseite der Röhren 2-i ablagern, werden durch die wandernden Taupunkte TP(x), d. h. durch das gebildete Kondenswasser, gelöst und fließen zusammen mit dem Kondenswasser ab. Bei einer möglichen Ausführungsform des verwendeten selbstreinigenden Abluftfilters 1 wird die Massenstrommenge m°_{F} des umströmenden Fluids F periodisch derart verändert, dass der Taupunkt TP ebenfalls periodisch zwischen den beiden Stirnseiten 4A, 4B des Abluftfilters 1 hin- und herwandelt und so die Röhren 2-i entlang ihrer gesamten Länge L innen von Schmutzpartikeln reinigt.

Das durch die Wendekammer 3 mäanderförmig hindurchströmende Fluid F wird durch die heiße Abluft A innerhalb der Röhren 2-i stark erwärmt, sodass die Temperatur T_{F}' des Fluids F an dem Auslass 7 höher ist als die Temperatur T_{F}' des Fluids F an dem Einlass 6. Die Erwärmung des Fluids F bei dem selbstreinigenden Ablauffilters 1 wird zur Energierückgewinnung bzw. zum Energie-Recycling genutzt.

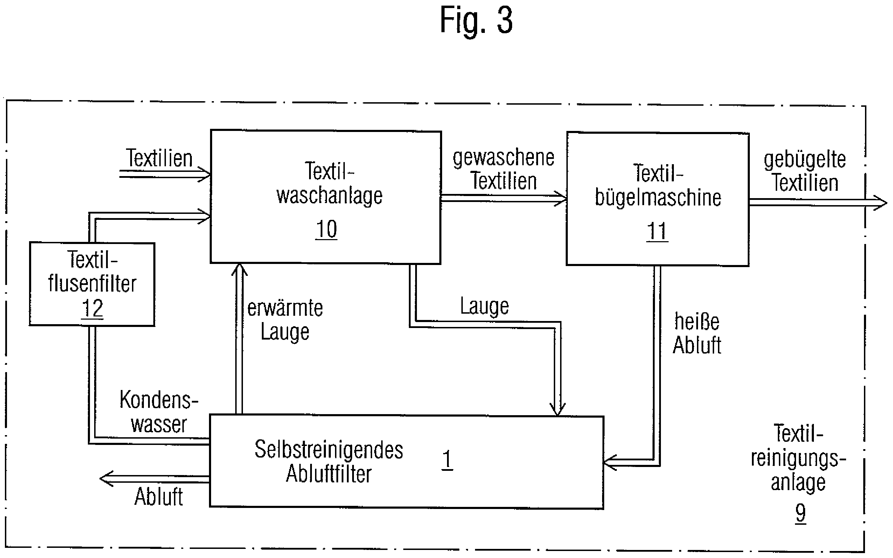

Figur 3 zeigt eine mögliche Ausführungsform einer Reinigungsanlage 9, welche das selbstreinigende Abluftfilter 1 enthält. Die Textilreinigungsanlage 9 weist eine Textilwaschanlage 10 auf, in welcher beliebige Textilien unter Einsatz von Chemikalien gewaschen werden, wobei die gewaschenen Textilien einer Textilbügelmaschine 11 zugeführt werden. In der Textilbügelmaschine bzw. Mangel 11 werden die Textilien gepresst und gebügelt, wobei wasserübersättigte Abluft A, die eine große Menge an Textilflusen, Wachsen und weitere Schmutzpartikel enthält, abgegeben wird. Diese heiße Abluft A wird dem selbstreinigenden Abluftfilter 1 zuge-führt. Als Fluid F zum Abkühlen der heißen Abluft A wird bei der Textilreinigungsanlage 9 Lauge, die aus einem Endabschnitt der Textilwaschanlage 10 abgegeben wird, benutzt. Durch das selbstreinigende Abluftfilter 1 wird die in der Wendekammer 3 an den Röhren 2 vorbeiströmende Lauge erwärmt und an die Textilwaschanlage 10 zurückgeführt. Das durch den Trichter 8 des selbstreinigenden Abluftfilters 1 gesammelte Kondenswasser, welches die Textilflusen enthält, wird einem Textilflusenfilter 12 zugeführt, welches die Textilflusen weitgehend herausfiltert. Das so gesammelte Kondenswasser wird zusammen mit den Textilien einem Einwaschvorgang der Textilwaschanlage 10 zugeführt. Die gekühlte, von Textilflusen und weiteren Schmutzpartikeln befreite Abluft A wird durch die Textilreinigungsanlage 9 an die Umgebung abgegeben.

Die in Figur 3 dargestellte Textilreinigungsanlage 9 weist zwei Recycling-Mechanismen auf, nämlich einerseits Energie-Recycling aufgrund der Erwärmung der Lauge und andererseits Wasser-Recycling durch Rückgewinnung von Kondenswasser für die Textilwaschanlage 10. Darüber hinaus wird die Umweltbelastung durch Herausfiltern der Textilflusen aus der heißen Abluft A stark vermindert.

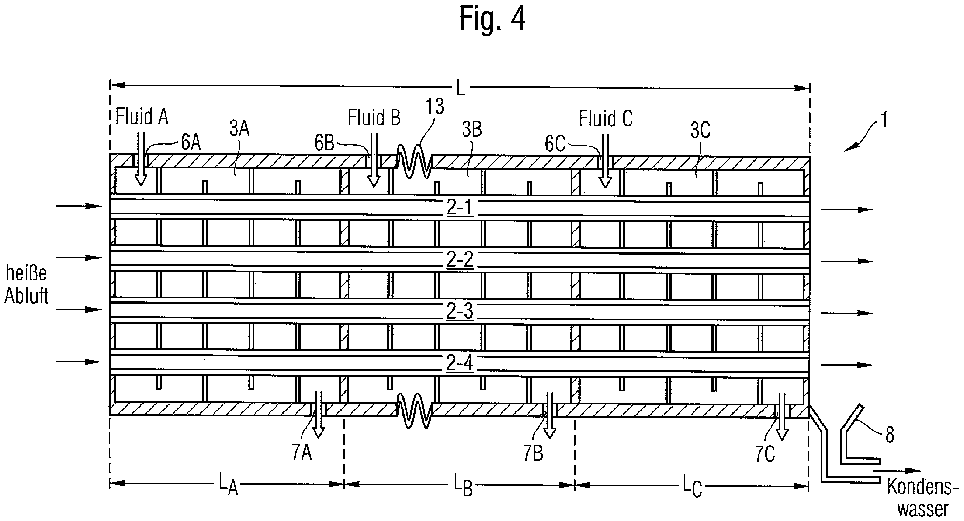

Figur 4 zeigt eine weitere Ausführungsform des verwendeten selbstreinigenden Abluftfilters 1. Bei der in Figur 4 dargestellten Ausführungsform weist das Abluftfilter 1 drei Wendekammern 3A, 3B, 3C auf, durch die jeweils unterschiedliche Fluide Fluid F_{A}, Fluid F_{B}, Fluid F_{c} strömen. Die Röhren 2-i erstrecken sich durch die drei Wendekammern 3A, 3B, 3C. Die Wendekammern 3A, 3B, 3C können dieselbe oder unterschiedliche Längen je nach Anwendungsfall aufweisen. Die durchströmenden Fluide F_{A}, F_{B}, F_{c} können durch unterschiedliche oder durch gleiche Gase bzw. Flüssigkeiten gebildet werden. Bei der in Figur 4 dargestellten Ausführungsform weist die Wendekammer 3C einen Faltenbalk 13 auf, der zum Ausgleich einer Wärmeausdehnung der Röhren 2-i vorgesehen ist. Bei Gebrauch des Ablauffilters 1 erwärmen sich die Röhren 2-i durch die hindurchströmende heiße Abluft A und dehnen sich aus. Zum Ausgleich der Wärmeausdehnung wird der Faltenbalk 13 an der Außenwandung des Abluftfilters 1 vorgesehen, um mechanische Verspannungen oder ein Abreissen zu vermeiden. Bei der in Figur 4 gezeigten Ausführungsform weist der Abluftfilter 1 einen Faltenbalk 13 auf. Bei einer alternativen Ausführungsform kann auch jede Wendekammer 3A, 3B, 3C einen eigenen Faltenbalk 13 aufweisen.

In einer weiteren Ausführungsform des verwendeten selbstreinigenden Abluftfilters 1 sind verschiedene Wendekammern 3A, 3B, 3C durch mechanische Verbindungselemente miteinander verbindbar. Bei dieser Ausführungsform ist der Abluftfilter 1 modular aufbaubar, indem mehrere Wendekammern 3-i miteinander mechanisch verbunden werden, d. h. die Röhren 2-i sind nicht wie bei der in Figur 4 dargestellten Ausführungsform durchgehend durch das gesamte Abluftfilter 1, sondern je-de Wendekammer 3-i weist eigene Röhren 2-i auf, die dann zu einer Gesamtröhre zusammengesetzt werden. Ein modularer Aufbau gestattet eine Einstellung der Gesamtlänge L des Abluftfilters 1 durch Wahl der Anzahl der miteinander seriell verbundenen Wendekammern 3 entsprechend den Anforderungen des Anwendungs-falles.

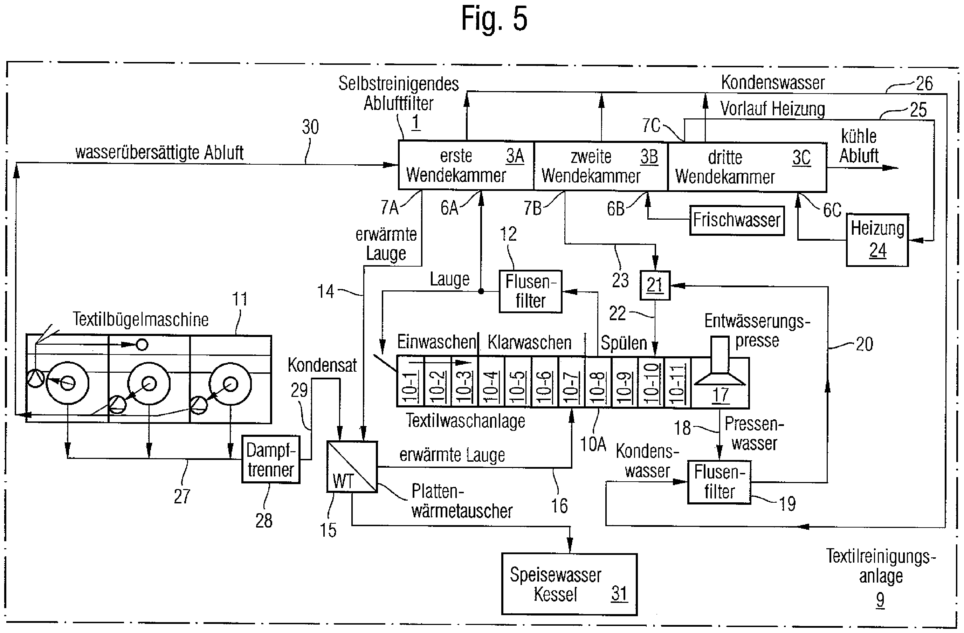

Figur 5 zeigt ein Anwendungsbeispiel für das in Figur 4 dargestellte Abluftfilter 1 mit drei Wendekammern 3A, 3B, 3C.

Eine Textilwaschanlage 10 innerhalb der Textilreinigungsanlage 9 weist mehrere Kammern 10-i zum Einwaschen, Klarwaschen und Spülen der Textilien auf. In einer Kammer 10-8 wird die beim Reinigen der Textilien verwendete Lauge abgeführt und durch ein Textilflusenfilter 12 von Textilienflusen befreit. Ein Teil der gefilterten Lauge wird in einer ersten Kammer 10-1 der Textilwaschanlage 10 zum Einwaschen zugeführt und ein anderer Teil der flusenbefreiten Lauge wird als Fluid einem Einlass 6A der ersten Wendekammer 3A des Abluftfilters 1 zugeführt. Durch die durchströmende heiße Abluft A wird die Lauge erwärmt und an dem Auslass 7A der ersten Wendekammer 3A erwärmt abgegeben. Bei der in Figur 5 dargestellten Ausführungsform strömt die erwärmte Lauge über eine Leitung 14 zu einem Plattenwärmetauscher 15. Durch den Plattenwärmetauscher 15 wird die bereits erwärmte Lauge 14 nochmals erwärmt und gelangt als hocherwärmte Lauge über eine Leitung 16 zu der Waschkammer 10-7 der Textilwaschanlage 10. Bei der in Figur 5 dargestellten Ausführungsform besteht das der ersten Wendekammer 3A des selbstreinigenden Abluftfilters 1 zugeführte Fluid F aus Lauge, die von der Textilwaschanlage 10 an das selbstreinigende Ablauffilter 1 abgegeben wird und die von dem selbstreinigenden Abluftfilter 1 erwärmt wieder an die Textilwaschanlage 10 zurückgeführt wird.

Die durch die Textilwaschanlage 10 gereinigten Textilien werden einer Entwässerungspresse 17 zugeführt, welche die Textilien presst, wobei das ausgepresste Wasser bzw. das Pressenwasser über eine Leitung 18 zusammen mit dem durch das Abluftfilter 1 gebildeten Kondenswasser einem weiteren Textilflusenfilter 19 zugeführt wird. Das gefilterte Pressen- und Kondenswasser wird über eine Wasserleitung 20 zu einem Umschalter 21 geführt. Dieser ist ausgangsseitig über eine Leitung 22 mit der Waschkammer 10-10 der Textilwaschanlage 10 verbunden. Mit dem Umschalter 21 kann der Waschkammer 10-10 einerseits das flusenbefreite Kondens- und Pressenwasser zugeführt werden oder erwärmtes Frischwasser, welches über eine Leitung 23 von einem Auslass 7B der zweiten Wendekammer 3B des selbstreinigenden Abluftfilters 1 abgegeben wird. Bei
der in Figur 5 dargestellten Ausführungsform erhält die Wendekammer 3B des Abluftfilters 1 als Kühlfluid am Einlass 6B Frischwasser, beispielsweise von einem Wassernetz. Das Frischwasser wird durch die heiße Abluft A erwärmt und kann zusätzlich bzw. alternativ zu dem flusenbefreiten Entwässerungs- und Kondenswasser der Textilwaschanlage 10 zugeführt werden.

Die dritte Wendekammer 3C des Abluftfilters 1 enthält als Fluid Rücklaufwasser einer Heizanlage 24, beispielsweise einer Fußbodenheizung. An dem Auslass 7C wird das erhitzte Vorlaufwasser an die Heizung 24 über eine Leitung 25 zurückgeführt. Das an das Abluftfilter 1 abgegebene Kondenswasser gelangt über eine Leitung 26 zu dem Textilflusenfilter 19 und wird somit in den Waschvorgang recycled.

Die von der Textilwaschanlage 10 abgegebenen gepressten Textilien werden der Textilbügelmaschine bzw. Mangel 11 zugeführt. Die Textilbügelmaschine 11 bzw. Mangel enthält verschiedene Walzen zum Bügeln der Textilien. Dabei entsteht einerseits eine sogenannte Mangelabluft bzw. wasserübersättigte Abluft A, die mit Schmutzpartikeln, insbesondere mit Textilflusen, belastet ist und andererseits reines Kondensat bzw. Wasser, welches über eine Leitung 27 einem Dampftrenner 28 zugeführt wird. Der Dampftrenner 28 ist ausgangsseitig über eine Leitung 29 mit dem Plattenwärmetauscher 15 verbunden, welcher die durch die erste Wendekammer 3A bereits erwärmte Lauge zusätzlich erhitzt. Die wasserübersättigte Abluft A wird durch die Textilbügelmaschine 11 erzeugt und über eine Leitung 30 dem Abluftfilter 1 zugeführt und strömt durch dessen Röhren 2-i hindurch, wobei sie sich abkühlt. Die abgekühlte und von Textilflusen und sonstigen Schmutzpartikeln befreite Abluft A wird dann an die Umgebung abgegeben. Das von dem Plattenwärmetauscher 15 abgegebene Wasser wird in einem Behälter 31 gesammelt.

Die in Figur 5 dargestellte Textilreinigungsanlage 9 weist drei Energie-Recycling-Kreisläufe auf. Durch eine erste Wendekammer 3A des Ablauffilters 1 wird die von der Textilwaschanlage 11 abgegebene Lauge erwärmt. Durch die zweite Wendekammer 3B des Abluftfilter 1 wird zugeführtes Frischwasser wird durch die heiße Abluft A erwärmt und der Textilwaschanlage 10 zugeführt. Durch die dritte Wendekammer 3C wird schließlich das von der Heizung 24 kommende Rücklaufwasser erwärmt.

Neben dem Energie-Recycling wird bei der Textilreinigungsanlage 9 gemäß Figur 5 auch das von der Entwässerungspresse 17 gelieferte Wasser und das von dem Abluftfilter 1 abgegebene Kondenswasser recycled und an die Textilwaschanlage 10 abgegeben.

Der selbstreinigende Abluftfilter 1 filtert die mit Wachsen, Tensiden und Salzen belastet Brüdenabluft der Textilbügelmaschine 11. Durch Einstellung der Massenstrommenge m°_{F} des kühlenden Fluids F, welches durch die Wendekammern 3 strömt oder durch Einstellung der Massenstrommenge m_{A}° der zugeführten Abluft A kann zudem die Lage des Taupunkts TP innerhalb der Röhren 2 zur Selbstreinigung des Abluftfilters 1 eingestellt werden.

Bei einer weiteren möglichen Ausführungsform wird den Zuläufen 6A, 6B, 6C der Wendekammer 3A, 3B, 3C in einem umschaltbaren Reinigungsbetriebsmodus ein anderes Reinigungsfluid zugeführt, dessen Massenstrommenge gezielt für die Reinigung des Abluftfilters 1 zur Verschiebung des Taupunkts TP verändert wird.

Bei einer möglichen Ausführungsform der Textilreinigungsanlage 9 ist die von der Mangel 11 abgegebene Brüdenabluft in einem Volumenstrom von ca. 4.200 m³ /h an das selbstreinigende Abluftfilter 1 abgegeben, wobei die Temperatur T_{A} der Abluft A etwa 100°C beträgt. Die Abluft enthält dabei eine Wassermassenstrommenge von 300 bis 400 kg/h. Die der ersten Wendekammer 3A zugeführte Lauge weist eine Eintrittstemperatur von etwa 75°C auf und wird durch die erste Wendekammer 3A und den Plattenwärmetauscher 15 auf die benötigten 90°C für den Waschvorgang aufgewärmt. Der ersten Wendekammer 3A werden ein Abluftström von etwa 23 kW an Leistung entzogen. Bei einem Wasservolumenstrom von 300 1/h entspricht dies einer Erwärmung des Wassers von 75 auf 81,8°C. Diese Energie wird dem Laugenstrom, der hauptsächlich aus Wasser besteht, zugeführt.

In der zweiten Stufe 3B des Abluftfilters 1 wird Frischwasser erwärmt. Das Frischwasser wird mit einer Einspeisetemperatur des Versorgungsunternehmens in den Wärmetauscher eingespeist, wobei diese Temperatur bei etwa 10°C liegt. Das erwärmte Frischwasser wird mit einer Temperatur von etwa 60°C abgegeben.

In der dritten Stufe des Abluftfilters 1 wird das Rücklaufwasser der Heizung 24 erwärmt. Die Rücklauftemperatur beträgt im Winter etwa 6°C und im Sommer etwa 12°C, wobei das Wasser durch die dritte Wendekammer 3C auf eine Vorlauftemperatur von 60°C erwärmt wird.

Die Temperatur T der von der Textilbügelmaschine 11 abgegebenen heißen Abluft A fällt beim Durchlaufen durch das selbstreinigende Abluftfilter 1 von etwa 100°C auf etwa 60°C ab.

Das verwendete selbstreinigende Abluftfilter 1 dient einerseits zum Herausfiltern von Schmutzpartikeln und andererseits als Wärmetauscher zur Rückgewinnung von Energie.

## Patentansprüche

1. Verfahren zum Filtern von Schmutzpartikeln aus einer wasserübersättigten Abluft,
wobei die wasserübersättigte Abluft mit einer einstellbaren Massenstrommenge (m_{A°}) durch Röhren (2) strömt, an denen außen ein Fluid (F) zum Abkühlen der durch die Röhren (2) hindurchströmenden Abluft derart vorbeiströmt,
dass ein in der Abluft enthaltener Wasserdampf innerhalb der Röhren (2) zu Wasser an einem wandernden Taupunkt (TP(x)) kondensiert, wobei die Lage (x) des Taupunktes (TP) entlang der Längsrichtung der Röhren (2) in Abhängigkeit von einer Massenstrommengendifferenz (Δm°) zwischen der Massenstrommenge (m_{A}°) der Abluft und einer Massenstrommenge (m_{F°}) des Fluids (F) eingestellt wird,
wobei das an dem wandernden Taupunkt TP(x) kondensierte Wasser die in der Abluft enthaltenen Schmutzpartikel aufnimmt und die Röhren (2) innen reinigt.

2. Verfahren nach Anspruch 1,
wobei die Massenstrommenge (m°_{F}) des umströmenden Fluids (F) periodisch derart verändert wird, dass der Taupunkt (TP) zwischen Stirnseiten (4A, 4B) des Abluftfilters (1) zur Reinigung der Röhren (2) entlang ihrer gesamten Länge (L) hin- und herwandelt.

3. Verwendung eines Abluftfilters zum Herausfiltern von Schmutzpartikeln, die in einer wasserübersättigten Abluft enthalten sind, wobei das Abluftfilter (1) aufweist:
(a) mehrere Röhren (2), durch welche die wasserübersättigte Abluft in einer Längsrichtung des Abluftfilters (1) hindurchströmt; und
(b) mindestens eine Wendekammer (3), durch die ein Fluid (F) außen an den Röhren des Abluftfilters (1) zum Abkühlen der durch die Röhren (2) hindurchströmenden Abluft vorbeiströmt;
**dadurch gekennzeichnet, dass**
ein innerhalb der Röhren (2) wandernder Taupunkt (TP(x)), dessen Lage (x) entlang der Längsrichtung der Röhren (2) von einer Massenstrommengendifferenz (Δm°) zwischen der Massenstrommenge (m_{A°}) der Abluft und einer Massenstrommenge (m_{F°}) des Fluids abhängt, derart eingestellt wird, dass ein in der Abluft enthaltener Wasserdampf an dem Taupunkt (TP(x)) zu Wasser kondensiert, und das kondensierte Wasser die in der Abluft enthaltenen Schmutzpartikel aufnimmt und die Röhren (2) entlang ihrer gesamten Länge (L) innen reinigt.

4. Verwendung des Abluftfilters nach Anspruch 3,
wobei die in Längsrichtung des Abluftfilters (1) verlaufenden Röhren (2) derart geneigt angeordnet sind, dass das Kondenswasser, welches innerhalb der Röhren (2) auf den Röhreninnenwandungen kondensiert, sich unten innerhalb der Röhren sammelt und aus den Röhren (2) abfließt, oder die durch die Röhren (2) hindurchströmende Abluft das sich unten innerhalb der Röhren (2) gesammelte Kondenswasser aus den Röhren (2) herausdrückt.

5. Verwendung des Abluftfilters nach einem der Ansprüche 3 und 4,
wobei die Wendekammer (3) mehrere quer zu der Längsrichtung des Abluftfilters (1) angeordnete Umlenkwandungen (5) aufweist, durch welche das Fluid mäanderförmig außen an den Röhren (5) quer zu der Längsrichtung des Abluftfilters (1) vorbeiströmt.

6. Verwendung des Abluftfilters nach einem der Ansprüche 3 bis 5,
wobei die heiße Abluft von einer Textilbügelmaschine (11) an das selbstreinigende Abluftfilter (1) abgegeben wird.

7. Verwendung des Abluftfilters nach Anspruch 6,
wobei die heiße Abluft der Textilbügelmaschine (11) eine Temperatur von 90°C - 100°C aufweist.

8. Verwendung des Abluftfilters nach Anspruch 6,
wobei ein Textilflusenfilter (12) die in der Abluft der Textilbügelmaschine (11) enthaltenen Textilflusen, welche durch das kondensierte Wasser aufgenommen werden, aus dem gesammelten Kondenswasser des selbstreinigenden Abluftfilters (1) herausfiltert.

9. Verwendung des Abluftfilters nach einem der Ansprüche 3 bis 8,
wobei das Fluid (F) ein Gas oder eine Flüssigkeit ist.

10. Verwendung des Abluftfilters nach einem der Ansprüche 3 bis 9,
wobei das selbstreinigende Abluftfilter (1) mehrere Wendekammern (3) aufweist, denen jeweils ein zugehöriges Fluid (F) separat zugeführt wird.

11. Verwendung des Abluftfilters nach Anspruch 10,
wobei das in der Wendekammer (3) des selbstreinigenden Abluftfilters zugeführte Fluid (F) durch das selbstreinigende Abluftfilter (1) erwärmt abgegeben wird.

12. Verwendung des Abluftfilters nach Anspruch 11,
wobei das einer Wendekammer (3) des selbstreinigenden Abluftfilters (1) zugeführte Fluid (F) aus Lauge besteht, die von eine Textilwaschanlage (11) an das selbstreinigende Abluftfilter (1) abgegeben wird und die von dem selbstreinigenden Abluftfilter (1) erwärmt an die Textilwaschanlage (11) zurückgeführt wird.

13. Verwendung des Abluftfilters nach Anspruch 10,
wobei das einer weiteren Wendekammer (3) des selbstreinigenden Abluftfilters (1) zugeführte Fluid (F) aus Wasser besteht, welches durch ein Textilflusenfilter (19) gefilterte Kondenswasser des selbstreinigenden Abluftfilters (1) enthält.

14. Verwendung des Abluftfilters nach Anspruch 10,
wobei das einer weiteren Wendekammer (3) des selbstreinigenden Abluftfilters (1) zugeführte Fluid (F) Wasser für eine Heizung ist.

15. Verwendung des Abluftfilters nach einem der Ansprüche 3 bis 14,
wobei die Röhren (2) einen Durchmesser von etwa 20 mm aufweisen.

16. Verwendung des Abluftfilters nach einem der Ansprüche 3 bis 15,
wobei die Röhren (2) aus Edelstahl hergestellt sind.

17. Verwendung des Abluftfilters nach einem der Ansprüche 3 bis 16,
wobei die Röhrenwandungen der jeweiligen Röhren (2) eine Dicke von etwa 1 mm aufweisen.

18. Verwendung des Abluftfilters nach einem der Ansprüche 3 bis 17,
wobei die Wendekammer (3) einen Faltenbalg (13) zum Ausgleich einer Wärmeausdehnung der Röhren (2) aufweist.

19. Verwendung eines Abluftfilters nach einem der Ansprüche 3 bis 18 in einer Textilreinigungsanlage (9), wobei die Textilreinigungsanlage aufweist:
(a) eine Textilwaschanlage (11A) zum Waschen von Textilien mittels eines Fluids;
(b) eine Textilbügelmaschine (11B) zum Bügeln der von der Textilwaschanlage (11A) gewaschenen Textilien, wobei die Textilbügelmaschine (11B) wasserübersättigte Abluft abgibt; und mit
(c) ein selbstreinigendes Abluftfilter (1) gemäß einem der Ansprüche 3 bis 18, welches die von der Textilbügelmaschine (11B) abgegebene Abluft filtert und das Fluid (F) für die Textilwaschanlage (11A) zum Recycling von Energie erwärmt.

20. Verwendung des Abluftfilters nach Anspruch 19,
wobei das von dem selbstreinigenden Abluftfilter (1) gebildete Kondenswasser durch ein Textilflusenfilter (19) gefiltert an die Textilwaschanlage (11A) zum Recycling von Wasser zurückgeführt wird.

## Claims

1. Method for filtering dirt particles from exhaust air oversaturated with water,
wherein the exhaust air oversaturated with water flows at an adjustable mass flow rate (m_{Aº}) through tubes (2) past the outside of which a fluid (F) flows in order to cool the exhaust air flowing through the tubes (2),
such that water vapour contained in the exhaust air condenses to water inside the tubes (2) at a shifting dew point (TP(x)), wherein the position (x) of the dew point (TP) in the longitudinal direction of the tubes (2) is adjusted depending on a mass flow rate difference (Δm°) between the mass flow rate (m_{Aº}) of the exhaust air and a mass flow rate (m_{Fº}) of the fluid (F),
wherein the water condensed at the shifting dew point TP(x) absorbs the dirt particles contained in the exhaust air and cleans the inside of the tubes (2).

2. Method according to claim 1,
wherein the mass flow rate (m°_{F}) of the circulating fluid (F) is changed periodically such that the dew point (TP) changes back and forth between end faces (4A, 4B) of the exhaust air filter (1) in order to clean the tubes (2) along the whole length (L) thereof.

3. Use of an exhaust air filter for filtering out dirt particles contained in air oversaturated with water, the exhaust air filter (1) comprising:
(a) a plurality of tubes (2) through which the exhaust air oversaturated with water flows in a longitudinal direction of the exhaust air filter (1); and
(b) at least one turning chamber (3) through which a fluid (F) flows past the outside of the tubes of the exhaust air filter (1) in order to cool the exhaust air flowing through the tubes (2),
**characterised in that**
a dew point (TP(x)) which shifts inside the tubes (2) and the position (x) of which in the longitudinal direction of the tubes (2) depends on a mass flow rate difference (Δm°) between the mass flow rate (m_{Aº}) of the exhaust air and a mass flow rate (m_{Fº}) of the fluid is adjusted such that water vapour contained in the exhaust air condenses to water at the dew point (TP(x)), and the condensed water absorbs the dirt particles contained in the exhaust air and cleans the inside of the tubes (2) along the whole length (L) thereof.

4. Use of the exhaust air filter according to claim 3,
wherein the tubes (2), which extend in the longitudinal direction of the exhaust air filter (1), are inclined such that the condensation water that condenses on the tube inner walls inside the tubes (2) collects on the bottom inside the tubes and flows out of the tubes (2), or the exhaust air flowing through the tubes (2) forces the condensation water that has collected on the bottom inside the tubes (2) out of the tubes (2).

5. Use of the exhaust air filter according to any of claims 3 and 4,
wherein the turning chamber (3) comprises a plurality of diverting walls (5) arranged transversely to the longitudinal direction of the exhaust air filter (1), through which walls the fluid flows past the outside of the tubes (5) transversely to the longitudinal direction of the exhaust air filter (1) in a meandering manner.

6. Use of the exhaust air filter according to any of claims 3 to 5,
wherein the hot exhaust air is discharged to the self-cleaning exhaust air filter (1) by a textile pressing machine (11).

7. Use of the exhaust air filter according to claim 6,
wherein the hot exhaust air from the textile pressing machine (11) has a temperature of between 90º to 100ºC.

8. Use of the exhaust air filter according to claim 6,
wherein the textile lint which is contained in the exhaust air from the textile pressing machine (11) and is absorbed by the condensed water is filtered out of the collected condensation water from the self-cleaning exhaust air filter (1) by a textile lint filter (12).

9. Use of the exhaust air filter according to any of claims 3 to 8,
wherein the fluid (F) is a gas or a liquid.

10. Use of the exhaust air filter according to any of claims 3 to 9,
wherein the self-cleaning exhaust air filter (1) comprises a plurality of turning chambers (3) to each of which an associated fluid (F) is separately fed.

11. Use of the exhaust air filter according to claim 10,
wherein the fluid (F) fed in the turning chamber (3) of the self-cleaning exhaust air filter is discharged after being heated by the self-cleaning exhaust air filter (1).

12. Use of the exhaust air filter according to claim 11,
wherein the fluid (F) fed to a turning chamber (3) of the self-cleaning filter (1) consists of lye that is discharged to the self-cleaning exhaust air filter (1) by a textile washing unit (11) and fed back to the textile washing unit (11) after being heated by the self-cleaning exhaust filter (1).

13. Use of the exhaust air filter according to claim 10,
wherein the fluid (F) fed to an additional turning chamber (3) of the self-cleaning exhaust air filter (1) consists of water that contains condensation water from the self-cleaning exhaust air filter (1) that has been filtered by a textile lint filter (19).

14. Use of the exhaust air filter according to claim 10,
wherein the fluid (F) fed to an additional turning chamber (3) of the self-cleaning exhaust air filter (1) is water for a heating installation.

15. Use of the exhaust air filter according to any of claims 3 to 14,
wherein the tubes (2) have a diameter of approximately 20 mm.

16. Use of the exhaust air filter according to any of claims 3 to 15,
wherein the tubes (2) are made of stainless steel.

17. Use of the exhaust air filter according to any of claims 3 to 16,
wherein the tube walls of each tube (2) have a thickness of approximately 1 mm.

18. Use of the exhaust air filter according to any of claims 3 to 17,
wherein the turning chamber (3) comprises a bellows (13) for counterbalancing thermal expansion of the tubes (2).

19. Use of an exhaust air filter according to any of claims 3 to 18 in a textile cleaning unit (9), wherein the textile cleaning unit comprises:
(a) a textile washing unit (11A) for washing textiles by means of a fluid;
(b) a textile pressing machine (11 B) for pressing textiles washed by the textile washing unit (11 A), wherein the textile pressing machine (11 B) discharges air oversaturated with water; and
(c) a self-cleaning exhaust air filter (1) according to any of claims 3 to 18 that filters the exhaust air discharged by the textile pressing machine (11 B) and heats the fluid (F) for the textile washing unit (11 A) in order to recycle energy.

20. Use of the exhaust air filter according to claim 19,
wherein the condensation water formed by the self-cleaning exhaust air filter (1), having been filtered by a textile lint filter (19), is fed back to the textile washing unit (11A) in order to recycle water.

## Revendications

1. Procédé destiné à la filtration de particules de saleté à partir d'un air évacué, sursaturé en eau,
où l'air évacué, sursaturé en eau, circule à travers des tubes (2) avec un débit massique (m_{Aº}) réglable, au niveau desquels s'écoule à l'extérieur un fluide (F) destiné au refroidissement de l'air évacué passant à travers les tubes (2), de telle sorte que une vapeur d'eau contenue dans l'air évacué se condense en eau à l'intérieur des tubes (2) à un point de rosée mobile (TP(x)), où la position (x) du point de rosée (TP) est réglée le long de la direction longitudinale des tubes (2) en fonction d'une différence de débit massique (Δm°) entre le débit massique (m_{Aº}) de l'air évacué et un débit massique (m_{Fº}) du fluide (F),
où l'eau condensée au point de rosée mobile TP(x) absorbe les particules de saleté contenues dans l'air évacué et nettoie les tubes (2) à l'intérieur.

2. Procédé selon la revendication 1,
où le débit massique (m°_{F}) du fluide (F) en circulation est modifié périodiquement de telle sorte que le point de rosée (TP) se déplace ici et là entre les faces frontales (4A, 4B) du filtre d'évacuation de l'air (1) en vue du nettoyage des tubes (2) le long de toute leur longueur (L).

3. Utilisation d'un filtre d'évacuation de l'air destiné à l'élimination par filtrage de particules de saleté qui sont contenues dans un air évacué, sursaturé en eau, où le filtre d'évacuation de l'air (1) présente :
(a) plusieurs tubes (2), à travers lesquels l'air évacué, sursaturé en eau, s'écoule dans une direction longitudinale du filtre d'évacuation de l'air (1) ; et
(b) au moins une chambre de reflux (3), à travers laquelle un fluide (F) s'écoule à l'extérieur au niveau des tubes du filtre d'évacuation de l'air (1) en vue du refroidissement de l'air évacué passant à travers les tubes (2) ;
**caractérisée en ce que**
un point de rosée mobile (TP(x)) se trouvant à l'intérieur des tubes (2), et dont la position (x) le long de la direction longitudinale des tubes (2) dépend d'une différence de débit massique (Δm°) entre le débit massique (m_{Aº}) de l'air évacué et un débit massique (m_{Fº}) du fluide, est réglé de telle sorte qu'une vapeur d'eau contenue dans l'air évacué se condense en eau au point de rosée (TP(x)), et l'eau condensée absorbe les particules de saleté contenues dans l'air évacué et nettoie les tubes (2) à l'intérieur, le long de toute leur longueur (L).

4. Utilisation du filtre d'évacuation de l'air selon la revendication 3,
où les tubes (2) qui s'étendent dans la direction longitudinale du filtre d'évacuation de l'air (1) sont disposés de manière inclinée, de telle sorte que l'eau de condensation, laquelle se condense sur les parois intérieures des tubes, à l'intérieur des tubes (2), s'accumule en bas à l'intérieur des tubes et s'écoule en dehors des tubes (2), ou l'air évacué passant à travers les tubes (2) expulse, en dehors des tubes (2), l'eau de condensation qui s'est accumulée en bas, à l'intérieur des tubes (2).

5. Utilisation du filtre d'évacuation de l'air selon l'une des revendications 3 et 4,
où la chambre de reflux (3) présente plusieurs parois de déviation (5) disposées à la transversale de la direction longitudinale du filtre d'évacuation de l'air (1), et à travers lesquelles le fluide s'écoule de manière méandreuse à l'extérieur au niveau des tubes (5), à la transversale de la direction longitudinale du filtre d'évacuation de l'air (1).

6. Utilisation du filtre d'évacuation de l'air selon l'une des revendications 3 à 5,
où l'air brûlant évacué d'une machine à repasser les textiles (11) est dégagé vers le filtre autonettoyant d'évacuation de l'air (1).

7. Utilisation du filtre d'évacuation de l'air selon la revendication 6,
où l'air brûlant évacué de la machine à repasser les textiles (11) présente une température comprise entre 90°C et 100 °C.

8. Utilisation du filtre d'évacuation de l'air selon la revendication 6,
où un filtre à peluches pour textiles (12) extrait par filtrage les peluches de textiles contenues dans l'air évacué de la machine à repasser les textiles (11) hors de l'eau de condensation accumulée du filtre autonettoyant d'évacuation de l'air (1), lesquelles peluches de textiles sont absorbées par l'eau condensée.

9. Utilisation du filtre d'évacuation de l'air selon l'une des revendications 3 à 8,
où le fluide (F) est un gaz ou un liquide.

10. Utilisation du filtre d'évacuation de l'air selon l'une des revendications 3 à 9,
où le filtre autonettoyant d'évacuation de l'air (1) présente plusieurs chambres de reflux (3), vers lesquelles un fluide (F) qui leur est respectivement associé est amené séparément.

11. Utilisation du filtre d'évacuation de l'air selon la revendication 10,
où le fluide (F) amené dans la chambre de reflux (3) du filtre autonettoyant d'évacuation de l'air est dégagé, en étant réchauffé à travers le filtre autonettoyant d'évacuation de l'air (1).

12. Utilisation du filtre d'évacuation de l'air selon la revendication 11,
où le fluide (F) amené vers une chambre de reflux (3) du filtre autonettoyant d'évacuation de l'air (1) est composé d'une solution alcaline qui est dégagée par une installation de lavage pour textiles (11) vers le filtre autonettoyant d'évacuation de l'air (1) et qui est renvoyée vers l'installation de lavage pour textiles (11), en étant réchauffée par le filtre autonettoyant d'évacuation de l'air (1).

13. Utilisation du filtre d'évacuation de l'air selon la revendication 10,
où le fluide (F) amené vers une autre chambre de reflux (3) du filtre autonettoyant d'évacuation de l'air (1) est composé d'eau, laquelle contient de l'eau de condensation du filtre autonettoyant d'évacuation de l'air (1), filtrée à travers un filtre à peluches pour textiles (19).

14. Utilisation du filtre d'évacuation de l'air selon la revendication 10,
où le fluide (F) amené vers une autre chambre de reflux (3) du filtre autonettoyant d'évacuation de l'air (1) est de l'eau pour un radiateur.

15. Utilisation du filtre d'évacuation de l'air selon l'une des revendications 3 à 14,
où les tubes (2) présentent un diamètre d'environ 20 mm.

16. Utilisation du filtre d'évacuation de l'air selon l'une des revendications 3 à 15,
où les tubes (2) sont fabriqués en acier inoxydable.

17. Utilisation du filtre d'évacuation de l'air selon l'une des revendications 3 à 16,
où les parois tubulaires des tubes (2) respectifs présentent une épaisseur d'environ 1 mm.

18. Utilisation du filtre d'évacuation de l'air selon l'une des revendications 3 à 17,
où la chambre de reflux (3) présente un soufflet (13) destiné à la compensation d'une dilatation thermique des tubes (2).

19. Utilisation d'un filtre d'évacuation de l'air selon l'une des revendications 3 à 18 dans une installation de nettoyage des textiles (9), où l'installation de nettoyage des textiles présente :
(a) une installation de lavage pour textiles (11 A) destinée au lavage de textiles au moyen d'un fluide ;
(b) une machine à repasser les textiles (11 B) destinée au repassage des textiles lavés par l'installation de lavage pour textiles (11 A), où la machine à repasser les textiles (11 B) dégage un air évacué, sursaturé en eau ; et avec
(c) un filtre autonettoyant d'évacuation de l'air (1), conformément à l'une des revendications 3 à 18, lequel filtre l'air évacué qui est dégagé par la machine à repasser les textiles (11 B) et réchauffe le fluide (F) pour l'installation de lavage pour textiles (11 A) en vue d'un recyclage de l'énergie.

20. Utilisation du filtre d'évacuation de l'air selon la revendication 19,
où l'eau de condensation formée par le filtre autonettoyant d'évacuation de l'air (1) est renvoyée, filtrée à travers un filtre à peluches pour textiles (19), vers l'installation de lavage pour textiles (11 A) en vue d'un recyclage de l'eau.
